# EUROPÄISCHE PATENTSCHRIFT

(11) **EP 3 478 969 B1**
(45) Veröffentlichungstag und Bekanntmachung des Hinweises auf die Patenterteilung: **30.11.2022**
(21) Anmeldenummer: 17732751.7
(22) Anmeldetag: 26.06.2017
(51) Int. Cl.: F15B 7/08, F16D 25/08

(54) **GEBERZYLINDER, INSBESONDERE FÜR EINE HYDRAULISCHE KUPPLUNGSBETÄTIGUNGSVORRICHTUNG IN KRAFTFAHRZEUGEN**
MASTER CYLINDER, IN PARTICULAR FOR A HYDRAULIC CLUTCH ACTUATION DEVICE IN MOTOR VEHICLES
CYLINDRE ÉMETTEUR, EN PARTICULIER POUR UN DISPOSITIF HYDRAULIQUE D'ACTIONNEMENT D'EMBRAYAGE DANS DES VÉHICULES

(30) Priorität: 30.06.2016 DE 102016007906
(43) Veröffentlichungstag der Anmeldung: 08.05.2019
(73) Patentinhaber: FTE automotive GmbH, 96106 Ebern (DE)
(72) Erfinder: LEHNERT, Alexander, 96274 Itzgrund (DE); STEINMETZ, Harry, 96106 Ebern (DE)
(74) Vertreter: Oppermann, Mark
(86) Internationale Anmeldenummer: PCT/EP2017/000742
(87) Internationale Veröffentlichungsnummer: WO 2018/001554

(56) Entgegenhaltungen:
- EP-A1- 1 386 809
- EP-A2- 1 637 746
- DE-A1-102006 010 141
- DE-A1-102009 021 347

## Beschreibung

### TECHNISCHES GEBIET

Die vorliegende Erfindung bezieht sich auf einen Geberzylinder gemäß dem Oberbegriff des Patentanspruchs 1. Insbesondere bezieht sich die Erfindung auf einen Geberzylinder für eine hydraulische Kupplungsbetätigungsvorrichtung in Kraftfahrzeugen, wie sie massenweise in der Automobilindustrie zum Einsatz kommen.

### STAND DER TECHNIK

Eine herkömmliche hydraulische Kupplungsbetätigungsvorrichtung in Kraftfahrzeugen hat einen Geberzylinder, der an einen mit Hydraulikflüssigkeit gefüllten Ausgleichsbehälter angeschlossen ist. Der Geberzylinder weist ein Zylindergehäuse auf, in dessen Gehäusebohrung ein Kolben längsverschieblich geführt ist. Der Geberzylinderkolben begrenzt in der Gehäusebohrung des Zylindergehäuses einen Druckraum und kann mittels eines Kupplungspedals über eine Kolbenstange mit einer Betätigungskraft beaufschlagt werden. Der Druckraum des Geberzylinders ist über eine Druckleitung mit einem Druckraum eines Nehmerzylinders hydraulisch verbunden, so dass der durch Niedertreten des Kupplungspedals in dem Druckraum des Geberzylinders erzeugte Druck über die Flüssigkeitssäule in der Druckleitung auf den Druckraum des Nehmerzylinders übertragbar ist. Der Nehmerzylinder weist ebenfalls ein Zylindergehäuse mit einer Gehäusebohrung auf, in der ein den Druckraum des Nehmerzylinders begrenzender und somit mit dem im Geberzylinder erzeugten Druck beaufschlagbarer Kolben längsverschieblich aufgenommen ist, der mit dem Ausrücklager der Kupplung in Wirkverbindung steht. Im Ergebnis kann das Ausrücklager der Kupplung über den Nehmerzylinderkolben mit einer Betätigungskraft beaufschlagt werden, um über einen Ausrückmechanismus die Kupplungsdruckplatte von der Kupplungsmitnehmerscheibe und somit den Motor vom Getriebe des Kraftfahrzeugs zu trennen.

Aus der Druckschrift EP 1 655 521 A1 ist ein Geberzylinder, insbesondere für eine hydraulische Kupplungsbetätigungsvorrichtung an Kraftfahrzeugen bekannt, der ein Zylindergehäuse mit einem darin längsverschieblich geführten Kolben aufweist. Der im Zylindergehäuse einen Druckraum variabel begrenzende Kolben ist mittels eines am Kolben angelenkten, über ein Kupplungspedal kraftbeaufschlagbaren Stößels aus einer Ruhestellung zu einer Betätigungsstellung und umgekehrt verschiebbar. Zur Anlenkung des Stößels am Kolben besitzt der Stößel ein Kugelende, das in einer Ausnehmung am äußeren Ende des Kolbens aufgenommen und dort mittels eines Einsatzteils mit einem Kugelsitz und einer bezüglich des Kugelsitzes hinterschnittenen Einführungshülse gehalten ist. Das Einsatzteil selbst ist in der gestuften Ausnehmung des Kolbens mittels einer kombinierten Kraftschluss-(Presspassung) / Formschlussverbindung zum Kolben gesichert, die am Außenumfang eines dem Kugelsitz in Richtung des Druckraums vorgelagerten, im Wesentlichen zylindrischen Befestigungsabschnitts des Einsatzteils ausgebildet ist, was indes einen gewissen axialen Bauraum beansprucht.

Bei einer Betätigung des Geberzylinders wird die Verbindung zwischen dem Stößel und dem Kolben nur mit Druckkräften beaufschlagt, denen das vorbekannte Einsatzteil im Allgemeinen gut zu widerstehen vermag. Die Rückstellung des Geberzylinderkolbens aus einer Betätigungsstellung im Zylindergehäuse in seine Ruhestellung erfolgt in der Regel über die in der Druckleitung zwischen Geberzylinder und Nehmerzylinder vorhandene Flüssigkeitssäule, die aufgrund der Federkraft der Kupplung vom Nehmerzylinder zum Geberzylinder zurückgeschoben wird und im Druckraum des Geberzylinders den Geberzylinderkolben rückstellend hydraulisch beaufschlagt.

Insbesondere bei der Montage des Geberzylinders oder bei Arbeiten am Kupplungspedal können allerdings auch Zugkräfte infolge eines Ziehens am Stößel oder Kupplungspedal auftreten, die von der Verbindung zwischen Stößel und Kolben aufgenommen werden müssen, ohne diese zu beschädigen oder gar zu lösen. In dieser Hinsicht steht bei dem Geberzylinder gemäß diesem Stand der Technik das Einsatzteil auf der vom Druckraum abgewandten Seite des Kolbens vorteilhaft mit einem Anschlagende an der Einführungshülse über die Ausnehmung im Kolben vor, so dass das Anschlagende in der Ruhestellung des Kolbens an einer zugeordneten Anschlagfläche des Zylindergehäuses zur Anlage gelangen kann und Zugkräfte von der Formschlussverbindung zwischen Einsatzteil und Kolben ferngehalten werden.

Speziell bei Kupplungsbetätigungsvorrichtungen, deren Kupplungspedal mit einer Rückstellfeder versehen ist, können allerdings auch Situationen entstehen - z.B. wenn der Fahrer vom Kupplungspedal abrutscht - bei denen am Stößel eine Zugkraft aufgebracht wird, während sich der Kolben des Geberzylinders noch in einer Betätigungsstellung befindet. Ebenfalls sind Situationen denkbar, bei denen etwa infolge einer unzureichenden Entlüftung der Hydraulik das Kupplungspedal hängt, worauf der Fahrer das Kupplungspedal mit Gewalt zurückzieht. Auch in diesen Situationen wäre es wünschenswert, wenn die Verbindung zwischen Stößel und Kolben infolge von Missbrauchskräften keinen Schaden nimmt bzw. sich nicht löst. Dennoch sollte die Verbindung nur einen kleinen Bauraum beanspruchen, um möglicht universell, insbesondere auch bei beengten Platzverhältnissen einsetzbar zu sein.

Im Stand der Technik wurde auch schon vorgeschlagen (DE 196 08 132 A1), zur Ausbildung einer Gelenkverbindung zwischen Stößel und Kolben eines Geberzylinders ein ringförmiges Einsatzteil hinter einem Kugelkopf des Stößels in einer Ausnehmung des Kolbens einzukleben oder einzuschweißen, um den Stößel am Kolben zu sichern.

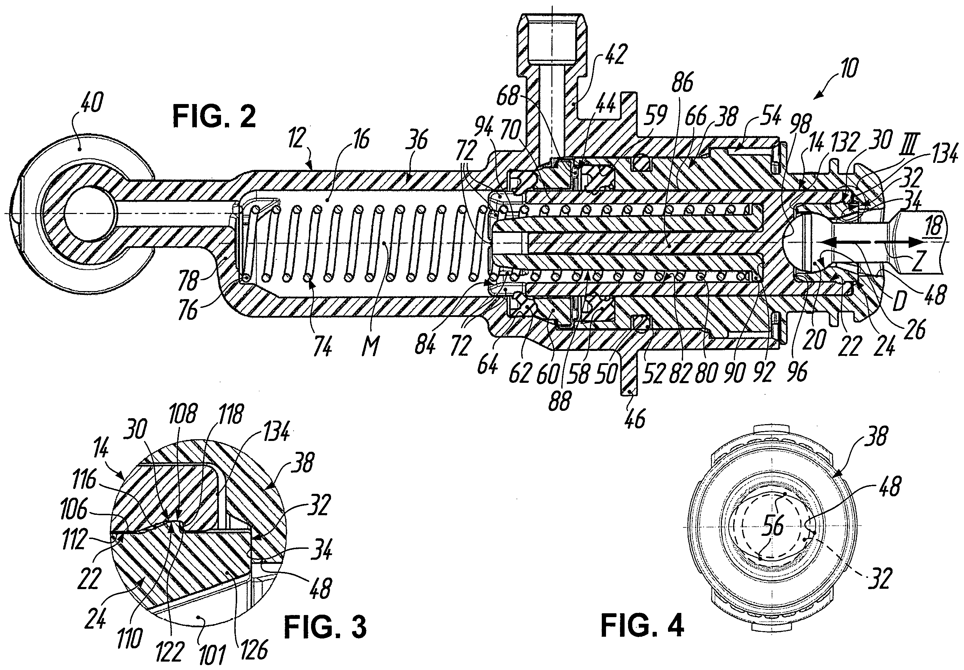

Des Weiteren offenbart die den Oberbegriff des Patentanspruchs 1 bildende Druckschrift EP 1 637 746 A2 einen Geberzylinder eines hydraulischen Kupplungsausrücksystems, mit einem in einem Zylindergehäuse geführten Kolben, welcher mittels einer Kolbenstange bewegbar ist, wobei an dem Kolben zumindest ein mitbewegbares Dichtelement vorgesehen ist, welches das Eindringen von unerwünschten Fremdpartikeln in einen Druckraum des Geberzylinders verhindern soll. Bei einer Ausführungsform (Fig. 2, 3) ist das Dichtelement als Lippendichtring ausgebildet, der mittels einer an dem Kolben befestigten Kolbenklammer zum Befestigen der Kolbenstange gehalten ist. Hierbei ist das Dichtelement zwischen einem der Kolbenstange zugewandten Ende des Kolbens und der Kolbenklammer in einer dort gebildeten Ausnehmung befestigt. Ein als Kolbenanschlag dienendes Ende einer Führungshülse des Zylindergehäuses ist segmentweise unterteilt, so dass die Dichtlippe des mitbewegten Dichtelements Schmutzpartikel durch die Zwischenräume der unterteilten Führungshülse an die Umgebung befördern kann.

Weitere Maßnahmen, eine mit einem Kugelkopf versehene Kolbenstange in einer zugeordneten Aussparung eines Kolbens mittels wenigstens eines weiteren Bauteils formschlüssig zu sichern, sind schließlich aus den Druckschriften DE 10 2006 010 141 A1, DE 10 2009 021 347 A1 und EP 1 386 809 A1 bekannt.

### AUFGABENSTELLUNG

Der Erfindung liegt ausgehend von dem oben geschilderten Stand der Technik die Aufgabe zugrunde, einen Geberzylinder, insbesondere für eine hydraulische Kupplungsbetätigungsvorrichtung in Kraftfahrzeugen zu schaffen, bei dem die Anlenkung der Kolbenstange am Kolben möglichst montagefreundlich und auszugsfest gestaltet ist, gleichwohl nur einen tunlichst kleinen Bauraum beansprucht.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 15.

Bei einem Geberzylinder, insbesondere für eine hydraulische Kupplungsbetätigungsvorrichtung in Kraftfahrzeugen, der ein Zylindergehäuse hat, in dem ein Kolben längsverschieblich geführt ist, welcher einen Druckraum variabel begrenzt und mittels einer am Kolben angelenkten Kolbenstange aus einer Ruhestellung zu einer Betätigungsstellung und umgekehrt verschiebbar ist, wobei die Kolbenstange einen Kugelkopf aufweist, der in einer vom Druckraum abgewandten Aussparung des Kolbens aufgenommen und dort durch ein Einsatzteil mit einem Hinterschnitt gehalten ist, das mittels einer Formschlussverbindung zum Kolben in der Aussparung gesichert ist und auf der vom Druckraum abgewandten Seite des Kolbens mit einem Anschlagende über die Aussparung vorsteht, wobei der Kugelkopf der Kolbenstange in der Aussparung unmittelbar am Kolben anliegt, so dass über die Kolbenstange aufgebrachte Druckkräfte direkt auf den Kolben übertragbar sind, und wobei die Formschlussverbindung des Einsatzteils zum Kolben sich zwischen dem Hinterschnitt und dem Anschlagende des Einsatzteils befindet, so dass über die Kolbenstange aufgebrachte Zugkräfte in einer Betätigungsstellung des Kolbens die Formschlussverbindung des Einsatzteils zum Kolben verstärken; gelangt erfindungsgemäß das Anschlagende des Einsatzteils in der Ruhestellung des Kolbens an einer zugeordneten Anschlagfläche des Zylindergehäuses zur Anlage, um Zugkräfte von der Formschlussverbindung zwischen Einsatzteil und Kolben fernzuhalten.

Zunächst ist das Festhalten an einer Formschlussverbindung zwischen Einsatzteil und Kolben besonders im Hinblick auf einen einfachen und problemlosen Zusammenbau des Geberzylinders von Vorteil: Gegenüber dem Stand der Technik gemäß der Druckschrift DE 196 08 132 A1 entfallen durch die formschlüssige Festlegung des Einsatzteils in der Aussparung des Kolbens prozesstechnisch ggf. problematische Klebe- oder Schweißvorgänge zur Befestigung des Einsatzteils. Weder ist - wie bei einem Klebevorgang - mit irgendwelchen Dosier- oder Vorratshaltungsproblemen zu rechnen, die Ergebnisse von "gar nicht kleben" (weil z.B. der Klebstoff eingetrocknet ist) bis "zu viel kleben" (mit etwa Verunreinigungen am Kolben oder später im Zylindergehäuse) zeitigen können, noch steht ein Verschweißen einer verdeckten Montage entgegen. Zudem können bei einer formschlüssigen Festlegung des Einsatzteils am Kolben auch Kolbenmaterialien eingesetzt werden, die keine oder nur schlechte Klebe- oder Schweißeigenschaften aufweisen.

Dadurch, dass der Kugelkopf der Kolbenstange in der Aussparung unmittelbar am Kolben anliegt, entfällt ferner im Vergleich zum eingangs diskutierten Stand der Technik der Abschnitt des Einsatzteils, über den die vermittels der Kolbenstange aufgebrachten Druckkräfte von deren Kugelkopf auf den Kolben übertragen werden. Die Aussparung im Kolben kann somit entsprechend kürzer ausgeführt werden, was wiederum eine besonders kurze Ausgestaltung des Kolbens ermöglicht und in der Folge gegenüber dem eingangs diskutierten Stand der Technik auch eine Verkürzung des Zylindergehäuses ohne "Hubverluste" gestattet.

Zugleich wird infolge der erfindungsgemäßen, im Vergleich zum eingangs diskutierten Stand der Technik "nach hinten" verlagerten axialen Position der Formschlussverbindung des Einsatzteils zum Kolben zwischen dem Hinterschnitt und dem Anschlagende des Einsatzteils die Formschlussverbindung des Einsatzteils zum Kolben verstärkt, wenn in einer Betätigungsstellung des Kolbens Zugkräfte über die Kolbenstange aufgebracht werden. Denn diese axiale Lage der Formschlussverbindung bedingt, dass in dem angesprochenen Zugfall ein radialer Anteil der vom Kugelkopf über den Hinterschnitt des Einsatzteils übertragenen Kräfte auf die Formschlussverbindung wirkt und deren Verbindungsabschnitte an- bzw. ineinander drückt. Dieser selbstverstärkende, die Auszugsfestigkeit der Kolbenstangenanlenkung am Kolben erhöhende Effekt kommt z.B. bei einem "Schnalzenlassen" der Kupplung zum Tragen, wenn aufgrund einer Rückstellfeder am Kupplungspedal eine Zugkraft an der Kolbenstange angreift.

Für die Ausgestaltung der Formschlussverbindung zwischen Einsatzteil und Kolben bestehen grundsätzlich verschiedene Möglichkeiten. So kann das Einsatzteil gegenüber dem Kolben z.B. mittels eines in einer ersten Nut an dem einen Teil gehaltenen, federnden Sicherungsrings festgelegt sein, der in eine zugeordnete zweite Nut an dem anderen Teil ein- bzw. ausfederbar ist. Insbesondere im Hinblick auf eine besonders einfache Montage ist es indes bevorzugt, die Formschlussverbindung als Schnappverbindung auszuführen.

Vorzugsweise ist hierbei an einer Innenumfangsfläche der Aussparung im Kolben oder an einer Außenumfangsfläche des Einsatzteils eine Mehrzahl von bezüglich einer Mittelachse des Geberzylinders radial an der jeweiligen Umfangsfläche überstehenden Vorsprüngen ausgebildet, die in einer zugeordneten Ausnehmung am jeweils anderen Teil verrastend eingreifen, wobei der Hinterschnitt des Einsatzteils einen Flächenabschnitt aufweist, über den Normalkräfte vom Kugelkopf direkt in Richtung der Vorsprünge leitbar sind. Der Flächenabschnitt kann hierbei z.B. konisch, mit einem vorbestimmten Konuswinkel, oder durch eine Kante, mit vorbestimmter axialer Lage, ausgebildet sein, um die Zugkräfte in Richtung der Formschlussverbindung zu richten. Im Hinblick auf eine möglichst geringe und gleichmäßige Flächenpressung zwischen Kugelkopf und Hinterschnitt bevorzugt ist eine zum Kugelkopf komplementäre Form des Flächenabschnitts am Hinterschnitt, d.h. die Form einer "Kugelzone", wie der gekrümmte Flächenteil einer "Kugelschicht" oder "Kugelscheibe" genannt wird, die entsteht, wenn ein Teil einer Vollkugel von zwei parallelen Ebenen ausgeschnitten wird.

Insbesondere für eine einfache, ggf. teil- oder vollautomatisierte Montage können die an der Außenumfangsfläche des Einsatzteils ausgebildeten Vorsprünge der Schnappverbindung nasenartig geformt sein, mit einer Fügeschräge auf ihrer dem Druckraum zugewandten Seite. Einem zuverlässigen Halten bei zugleich axialer Spielfreiheit der Schnappverbindung förderlich ist es hierbei, wenn ein erster Teil der nasenartig geformten Vorsprünge auf der vom Druckraum abgewandten Seite Rastflächen aufweist, die im Wesentlichen quer zur Mittelachse verlaufen, während ein zweiter Teil der nasenartig geformten Vorsprünge auf der vom Druckraum abgewandten Seite mit Vorspannschrägen versehen ist, über die das Einsatzteil in der Aussparung des Kolbens in Richtung des Druckraums vorspannbar ist. Ist dabei die Anordnung bevorzugt so getroffen, dass die nasenartig geformten Vorsprünge bezüglich der Mittelachse gleichmäßig voneinander winkelbeabstandet sind und sich Rastflächen und Vorspannschrägen von Vorsprung zu Vorsprung abwechseln, geht von den nasenartig geformten Vorsprüngen vorteilhaft auch eine das Einsatzteil in der Aussparung des Kolbens zentrierende Wirkung aus.

Prinzipiell kann die Ausnehmung für den verrastenden Eingriff der Vorsprünge aus mehreren Abschnitten bestehen, die nach Maßgabe der Lage der Vorsprünge am jeweils anderen Teil über dem Umfang verteilt angeordnet sind. Bevorzugt ist es allerdings, wenn es sich bei der Ausnehmung um eine umlaufende Nut an der Innenumfangsfläche der Aussparung im Kolben handelt, so dass bei der Montage des Einsatzteils zum Kolben eine Winkelorientierung dieser Teile zueinander nicht notwendig ist.

Bei Verwendung eines geeignet elastischen Werkstoffs kann das Einsatzteil einen elastisch verformbaren Ringabschnitt aufweisen, der die nasenartigen Vorsprünge trägt und deren Einfedern ermöglicht. In bevorzugter Ausgestaltung ist das Einsatzteil indes ausgehend von seinem vom Druckraum abgewandten Ende mit im Wesentlichen parallel zur Mittelachse verlaufenden Schlitzen versehen, die einzelne, die Vorsprünge tragende Federsegmente des Einsatzteils voneinander trennen.

Für die Möglichkeit einer "verdeckten" Montage, bei der der Kugelkopf der Kolbenstange voraus unter Überdrückung des Hinterschnitts am Einsatzteil in axialer Richtung zum Einsatzteil gefügt wird, ist es ferner bevorzugt, wenn das Einsatzteil ringförmig und mit einem durchgehenden Längsschlitz versehen ist, so dass das Einsatzteil auffederbar ist und somit nicht "von hinten" auf die Kolbenstange montiert werden muss. Das Auffedern des ringförmigen Einsatzteils kann des Weiteren dadurch begünstigt werden, dass das Einsatzteil innenumfangsseitig mit einer Mehrzahl von in Längsrichtung verlaufenden Nuten versehen ist, die in Umfangsrichtung gesehen gleichmäßig voneinander beabstandet sind und auf diese Weise quasi elastisch federnde "Filmscharniere" zum Auffedern des Einsatzteils ausbilden. Sind am Einsatzteil zugleich die vorerwähnten Schlitze zur Ausbildung der Federsegmente und die innenumfangsseitigen, scharnierbildenden Nuten vorgesehen, ist es insbesondere im Hinblick auf eine einfache spritzgusstechnische Herstellung aus Kunststoff sowie ein problemloses Verformungsverhalten des Einsatzteils von Vorteil, wenn die in Längsrichtung verlaufenden Nuten in den parallel zur Mittelachse verlaufenden Schlitzen enden.

Zur radialspielfreien Aufnahme des Einsatzteils in der Aussparung des Kolbens können prinzipiell das Einsatzteil am Außenumfang und die Aussparung des Kolbens am Innenumfang eng toleriert sein. Im Hinblick auf eine kostengünstige Herstellung bevorzugt ist es indes, wenn das Einsatzteil außenumfangsseitig mit einer Mehrzahl von radial überstehenden Längsrippen versehen ist, über die das Einsatzteil in der Aussparung radialspielfrei gehalten ist.

Grundsätzlich ist es möglich, den Kugelkopf der Kolbenstange gegen eine ebene Fläche an einem Boden der Aussparung im Kolben anliegen zu lassen. Zum Erhalt einer möglichst geringen und gleichmäßigen Flächenpressung sowie im Hinblick auf eine dauerhaft axialspielfreie Anbindung der Kolbenstange am Kolben ist es jedoch bevorzugt, wenn am Boden der Aussparung im Kolben eine zum Kugelkopf der Kolbenstange komplementär geformte, kugelkalottenförmige Ausnehmung ausgebildet ist, in der der Kugelkopf am Kolben unmittelbar anliegt.

Ist z.B. aus Bauraumgründen eine den Kolben in Richtung der Ruhestellung vorspannende Feder im Zylindergehäuse vorzusehen, so kann diese besonders platzsparend untergebracht werden, indem der Kolben eine dem Druckraum zugewandte zweite Aussparung aufweist, in der ein Ende dieser Feder aufgenommen ist, wobei die zweite Aussparung zur Montagevereinfachung an ihrem dem Druckraum zugewandten Ende innenumfangsseitig vorzugsweise mit einer umlaufenden Fügeschräge für die Feder versehen sein kann.

In der zweiten Aussparung des Kolbens kann schließlich ein zentraler Zentrierfortsatz ausgebildet sein, auf dem eine Führungshülse sitzt, die die Feder stützt. Vorteilhaft minimiert die Führungshülse auch das freie Volumen in der zweiten Aussparung des Kolbens, was nicht zuletzt die Entlüftung des Geberzylinders vereinfacht.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise schematischen Zeichnungen näher erläutert, in denen zur Vereinfachung der Darstellung elastomere bzw. elastische Teile im unverformten Zustand gezeigt sind. In den Zeichnungen zeigen:
- Fig. 1: eine Seitenansicht eines Geberzylinders für eine hydraulische Kupplungsbetätigungsvorrichtung in Kraftfahrzeuge nach einem bevorzugten Ausführungsbeispiel der Erfindung im nicht montierten Zustand, wobei sich ein mittels einer Kolbenstange in einem Zylindergehäuse längsverschiebbarer Kolben des Geberzylinders in einer Ruhestellung befindet, in der die Kolbenstange maximal aus dem Zylindergehäuse vorsteht;
- Fig. 2: eine im Maßstab gegenüber der Fig. 1 vergrößerte, nach rechts im Bereich der Kolbenstange abgebrochene Schnittansicht des Geberzylinders gemäß Fig. 1 entsprechend der Schnittverlaufslinie II-II in Fig. 1;
- Fig. 3: eine im Maßstab gegenüber der Fig. 2 stark vergrößerte Schnittansicht des Geberzylinders gemäß Fig. 1 entsprechend dem Detailkreis III in Fig. 2;
- Fig. 4: eine Vorderansicht eines zur Kolbenführung dienenden Gehäuseeinsatzes des Zylindergehäuses des Geberzylinders gemäß Fig. 1 im Maßstab von Fig. 2, mit einer zentralen ovalen Öffnung, durch die sich die hier nicht dargestellte Kolbenstange im montierten Zustand des Geberzylinders hindurch erstreckt;
- Fig. 5: eine im Maßstab gegenüber der Fig. 2 nochmals vergrößerte Seitenansicht des Kolbens des Geberzylinders gemäß Fig. 1;
- Fig. 6: eine Schnittansicht des Kolbens gemäß Fig. 5 entsprechend der Schnittverlaufslinie VI-VI in Fig. 5;
- Fig. 7: eine Rückansicht des Kolbens gemäß Fig. 5 von links in Fig. 5;
- Fig. 8: eine Vorderansicht des Kolbens gemäß Fig. 5 von rechts in Fig. 5;
- Fig. 9: eine im Maßstab gegenüber der Fig. 2 wiederum vergröβerte, perspektivische Ansicht eines Einsatzteils des Geberzylinders gemäß Fig. 1 von schräg unten/vorne, mittels dessen die Kolbenstange am Kolben angelenkt ist;
- Fig. 10: eine Seitenansicht des Einsatzteils gemäß Fig. 9;
- Fig. 11: eine Schnittansicht des Einsatzteils gemäß Fig. 9 entsprechend der Schnittverlaufslinie XI-XI in Fig. 10;
- Fig. 12: eine Vorderansicht des Einsatzteils gemäß Fig. 9 von rechts in Fig. 10;
- Fig. 13: eine Rückansicht des Einsatzteils gemäß Fig. 9 von links in Fig. 10; und
- Fig. 14: eine hinsichtlich Schnittverlauf und Darstellungsweise der Fig. 2 entsprechende Explosionsdarstellung zu den im Zylindergehäuse des Geberzylinders gemäß Fig. 1 längsverschieblich aufgenommenen Bauteilen vor deren Montage, mit - links - einer Führungshülse zur Stützung einer Rückstellfeder für den Kolben des Geberzylinders in einer Kolbenaussparung, mittig dem Kolben und - rechts - dem Einsatzteil, das mit einem Hinterschnitt an einem Kugelkopf der abgebrochen gezeigten Kolbenstange anliegt.

### DETAILLIERTE BESCHREIBUNG DES AUSFÜHRUNGSBEISPIELS

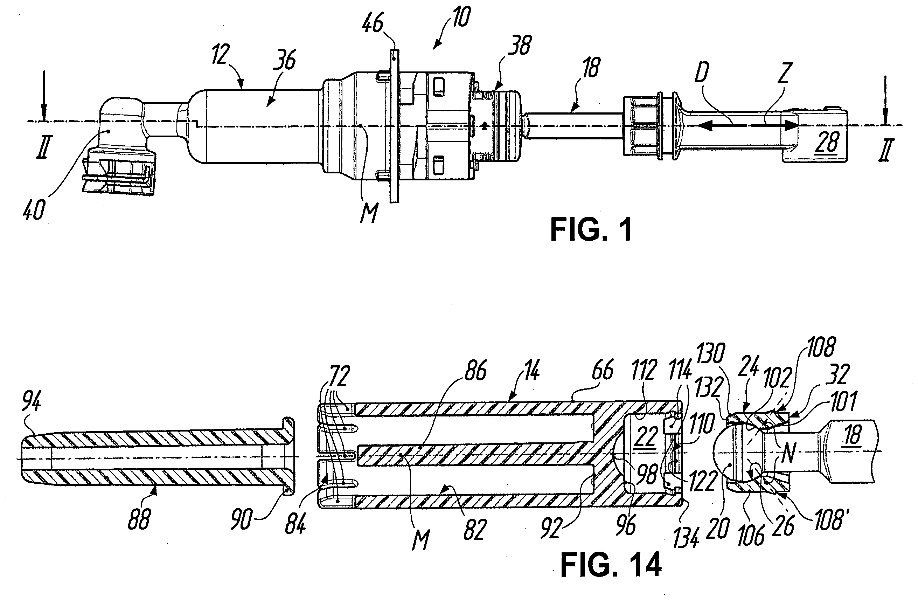

In den Fig. 1 und 2 ist beispielhaft für einen hydraulischen Geberzylinder ein solcher für eine hydraulische Kupplungsbetätigungsvorrichtung in Kraftfahrzeugen allgemein mit dem Bezugszeichen 10 beziffert. Der im nicht angeschlossenen, unbetätigten Zustand gezeigte Geberzylinder 10 hat ein Zylindergehäuse 12, in dem ein Kolben 14 entlang einer Mittelachse M längsverschieblich geführt ist. Der im Zylindergehäuse 12 einen Druckraum 16 (siehe Fig. 2) variabel begrenzende Kolben 14 ist mittels einer am Kolben 14 angelenkten Kolbenstange 18 aus einer in Fig. 2 dargestellten Ruhestellung zu einer Betätigungsstellung (nicht gezeigt) und umgekehrt verschiebbar. Die im dargestellten Ausführungsbeispiel einstückig aus Kunststoff spritzgegossene Kolbenstange 18 weist gemäß den Fig. 2 und 14 an ihrem Anschlussende zum Kolben 14 einen Kugelkopf 20 auf, der in einer vom Druckraum 16 abgewandten Aussparung 22 des Kolbens 14 aufgenommen und dort durch ein Einsatzteil 24 mit einem Hinterschnitt 26 gehalten ist. Das vom Kolben 14 abgewandte Anschlussende der Kolbenstange 18 ist mit einem Anschlussstück 28 ausgebildet, an dem ein Kupplungspedal (nicht gezeigt) auf eine Art und Weise seitlich angelenkt werden kann, wie sie z.B. in der Druckschrift DE 10 2007 061 640 A1 derselben Anmelderin ausführlich beschrieben ist, auf die an dieser Stelle bezüglich weiterer Details dieser Anbindung ausdrücklich verwiesen sei.

Wie nachfolgend noch näher beschrieben werden wird, ist das Einsatzteil 24 mittels einer Formschlussverbindung 30 zum Kolben 14 in der Aussparung 22 des Kolbens 14 gesichert und steht auf der vom Druckraum 16 abgewandten Seite des Kolbens 14 mit einem Anschlagende 32 über die Aussparung 22 vor, um in der Ruhestellung des Kolbens 14 an einer zugeordneten Anschlagfläche 34 des Zylindergehäuses 12 zur Anlage zu gelangen (vgl. die Fig. 2 und 3). Wesentlich ist, dass der Kugelkopf 20 der Kolbenstange 18 in der Aussparung 22 unmittelbar am Kolben 14 anliegt, so dass über die Kolbenstange 18 aufgebrachte Drucckräfte D (siehe auch Fig. 1) direkt auf den Kolben 14 übertragbar sind. Bedeutend ist ferner, dass sich die Formschlussverbindung 30 des Einsatzteils 24 zum Kolben 14 in axialer Richtung gesehen zwischen dem Hinterschnitt 26 und dem Anschlagende 32 des Einsatzteils 24 befindet, so dass über die Kolbenstange 18 aufgebrachte Zugkräfte Z in einer Betätigungsstellung des Kolbens 14 die Formschlussverbindung 30 des Einsatzteils 24 zum Kolben 14 verstärken, wie im Folgenden ebenfalls noch im Detail erläutert werden wird.

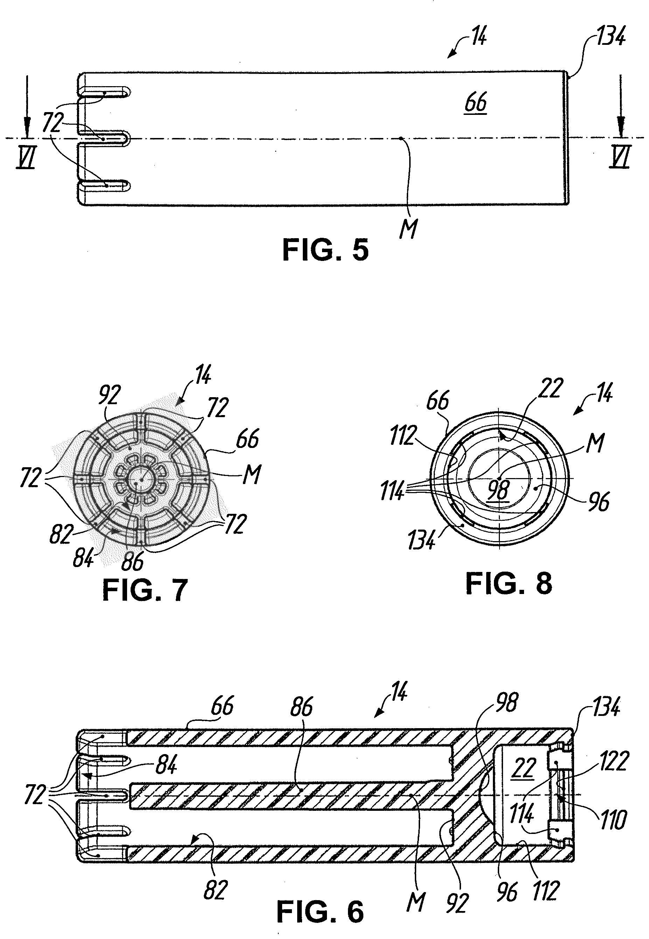

Gemäß den Fig. 1 und 2 ist das Zylindergehäuse 12 des Geberzylinders 10 zweiteilig aus Kunststoff ausgebildet und umfasst allgemein einen hohlen, den Druckraum 16 begrenzenden Gehäusegrundkörper 36 und einen darin eingesetzten Gehäuseeinsatz 38, über den der ebenfalls aus Kunststoff spritzgegossene, in den Fig. 5 bis 8 separat gezeigte Kolben 14 im Zylindergehäuse 12 längsverschieblich geführt und gesichert ist.

Das Zylindergehäuse 12, genauer dessen Gehäusegrundkörper 36 ist an seinem in den Fig. 1 und 2 linken Ende mit einem Druckanschluss 40 versehen, der mit dem Druckraum 16 kommuniziert und über den der Geberzylinder 10 auf an sich bekannte Weise mit einem Nehmerzylinder (nicht dargestellt) hydraulisch verbunden werden kann. Der Gehäusegrundkörper 36 weist ferner einen Nachlaufanschluss 42 auf, der mit einem Nachlaufbereich 44 (siehe Fig. 2) im Zylindergehäuse 12 kommuniziert und über den der Geberzylinder 10 ebenfalls auf an sich bekannte Weise mit einem Nachlaufbehälter (nicht gezeigt) hydraulisch verbunden werden kann.

In den Fig. 1 und 2 ist am Zylindergehäuse 12 ferner ein Befestigungsflansch 46 zu erkennen, mittels dessen der Geberzylinder 10 an einer Spritzwand (nicht dargestellt) im Kraftfahrzeug montiert werden kann. An dem in den Fig. 1 und 2 rechten Ende des Gehäuseeinsatzes 38 schließlich ragt die am Kolben 14 vermittels des Einsatzteils 24 winkelbeweglich angelenkte Kolbenstange 18 aus einer ovalen Öffnung 48 (vgl. Fig. 4) des Gehäuseeinsatzes 38 heraus, die eine gewisse Winkelauslenkung der Kolbenstange 18 bezüglich der Mittelachse M des Kolbens 14 ermöglicht.

Weitere Einzelheiten zum Inneren des Geberzylinders 10 sind insbesondere der Fig. 2 zu entnehmen. Demgemäß ist zunächst der mittels eines in einer Radialnut 50 des Gehäuseeinsatzes 38 aufgenommenen O-Rings 52 gegenüber dem Gehäusegrundkörper 36 statisch abgedichtete Gehäuseeinsatz 38 durch eine allgemein mit 54 bezifferte Bajonettverbindung im Gehäusegrundkörper 36 gehalten. Diese Bajonettverbindung 54 zwischen Gehäuseeinsatz 38 und Gehäusegrundkörper 36 ist in der älteren deutschen Patentanmeldung DE 10 2016 006 053.0 derselben Anmelderin ausführlich beschrieben, auf die an dieser Stelle bezüglich Aufbau und Funktion dieser Verbindung ausdrücklich verwiesen sei.

Am in Fig. 2 rechten Ende des Zylindergehäuses 12 bilden innenumfangsseitige Schulterabschnitte 56 (siehe Fig. 4) im Bereich der ovalen Öffnung 48 des Gehäuseeinsatzes 38 die innere Anschlagfläche 34 für das Einsatzteil 24 im Kolben 14 aus. In Fig. 4 ist mit gestrichelten Linien auch das durch eine im Wesentlichen ringförmige Stirnfläche des Einsatzteils 24 ausgebildete Anschlagende 32 des Einsatzteils 24 angedeutet, um zu veranschaulichen, dass und wo das Einsatzteil 24 in der Ruhestellung des Kolbens 14 am Gehäuseeinsatz 38 des Zylindergehäuses 12 zur Anlage gelangt (nämlich im außerhalb der ovalen Öffnung 48 liegenden "Überdeckungsbereich" des Gehäuseeinsatzes 38 mit dem gestrichelt angedeuteten Anschlagende 32 des Einsatzteils 24).

Am in Fig. 2 linken Ende des Gehäuseeinsatzes 38 ist dieser zur Aufnahme eines elastomeren Sekundärdichtelements 58 bei 59 ringförmig ausgespart. Zwischen dem Gehäusegrundkörper 36 und dem Gehäuseeinsatz 38 ist ein Stützring 60 angeordnet, der das Sekundärdichtelement 58 von einem Primärdichtelement 62 trennt, welches seinerseits in einer zugeordneten Ringaussparung 64 des Gehäusegrundkörpers 36 sitzt. Das Primärdichtelement 62 dichtet in einer nicht dargestellten Betriebsstellung des Kolbens 14, in der es an einer zylindrischen Lauffläche 66 am Außenumfang des Kolbens 14 dichtend anliegt, den Druckraum 16 gegenüber dem sich zwischen dem Primärdichtelement 62 und dem Sekundärdichtelement 58 befindenden Nachlaufbereich 44 ab, so dass im Druckraum 16 infolge eines Hubs des Kolbens 14 nach links in Fig. 2 ein Druck aufgebaut werden kann.

Am Stützring 60 über dessen Umfang verteilt vorgesehene Stirnnuten 68 und Axialnuten 70 bilden zusammen mit außerhalb der Lauffläche 66 des Kolbens 14 liegenden, ebenfalls über den Umfang verteilten Schlitzen 72 (siehe hierzu insbesondere die Fig. 5 bis 7 sowie 14) am druckraumseitigen Ende des Kolbens 14 eine Nachlaufeinrichtung. Die Nachlaufeinrichtung verbindet in der in Fig. 2 gezeigten Grundstellung des Kolbens 14 den Druckraum 16 unter der Dichtkontur des Primärdichtelements 62 hinweg mit dem Nachlaufbereich 44, um einen Druckausgleich zwischen dem Druckraum 16 und dem Nachlaufbereich 44 zu schaffen, einen Nachlauf von Hydraulikflüssigkeit vom Nachlaufbereich 44 in den Druckraum 16 zu gestatten und ggf. ein Entweichen von Luft aus dem Druckraum 16 über den Nachlaufbereich 44 zu ermöglichen. Das Sekundärdichtelement 58 schließlich liegt mit seiner Dichtkontur stets an der Lauffläche 66 des Kolbens 14 an, um den Nachlaufbereich 44 zur Atmosphäre bzw. Umgebung hin abzudichten.

Der Fig. 2 ist ferner zu entnehmen, dass der Geberzylinder 10 im gezeigten Ausführungsbeispiel eine im Druckraum 16 angeordnete Feder 74 in der Form einer Schraubendruckfeder aufweist, die den Kolben 14 in Richtung der Ruhestellung vorspannt, also rückstellend wirkt. Auf der in Fig. 2 linken Seite stützt sich die Feder 74 mit einem Ende 76 an einem Boden 78 des Gehäusegrundkörpers 36 ab. Das andere, in Fig. 2 rechte Ende 80 der Feder 74 ist platzsparend in einer dem Druckraum 16 zugewandten, zweiten Aussparung 82 des Kolbens 14 aufgenommen.

Die zweite Aussparung 82 des Kolbens 14 ist an ihrem dem Druckraum 16 zugewandten Ende innenumfangsseitig mit einer umlaufenden, gleichwohl von den Schlitzen 72 unterbrochenen Fügeschräge 84 für die Feder 74 versehen. Des Weiteren zeigen die Fig. 2, 6, 7 und 14, dass in der zweiten Aussparung 82 des Kolbens 14 ein zylindrischer, zentraler Zentrierfortsatz 86 ausgebildet ist, der sich entlang der Mittelachse M des Kolbens 14 bis zu den axialen Schlitzen 72 erstreckt. Der Zentrierfortsatz 86 kann so bei der spritzgusstechnischen Herstellung des Kolbens 14 vorteilhaft als zentraler Anspritzpunkt dienen, der für ein gleichmäßiges Füllen der Spritzgussform sorgt. Auf dem Zentrierfortsatz 86 sitzt gemäß Fig. 2 in enger Anordnung eine Führungshülse 88, die die Feder 74 stützt und das freie Volumen in der zweiten Aussparung 82 minimiert.

An ihrem in den Fig. 2 und 14 rechten Ende ist die Führungshülse 88 mit einem Ringbund 90 versehen, über den die Feder 74 die Führungshülse 88 an einem Boden 92 der zweiten Aussparung 82 hält. Mit ihrem in Fig. 2 linken Ende endet die ebenfalls aus Kunststoff spritzgegossene Führungshülse 88 kurz vor dem druckraumseitigen Ende des Kolbens 14. An ihrem über den Zentrierfortsatz 86 des Kolbens 14 gemäß Fig. 2 vorkragenden linken Ende besitzt die Führungshülse 88 schließlich außenumfangsseitig eine im Wesentlichen konisch verlaufende Fügeschräge 94 für die Feder 74.

Weitere Details zur gelenkigen Anbindung der Kolbenstange 18 am Kolben 14, zu dem hierfür vorgesehenen Einsatzteil 24 sowie zu dessen Befestigung in der ersten Aussparung 22 des Kolbens 14 sind den Fig. 2, 3, 6 und 8 bis 14 zu entnehmen. Wie zunächst die Fig. 2, 6 und 14 zeigen, ist an einem Boden 96 der Aussparung 22 im Kolben 14 eine zum Kugelkopf 20 der Kolbenstange 18 komplementär geformte, kugelkalottenförmige Ausnehmung 98 an zentraler Stelle ausgebildet. Gemäß Fig. 2 liegt der Kugelkopf 20 der Kolbenstange 18 in der kugelkalottenförmigen Ausnehmung 98 unmittelbar am Kolben 14 an, d.h. es befindet sich hier kein Abschnitt des Einsatzteils 24 zwischen Kolbenstange 18 und Kolben 14, so dass die Anordnung axial sehr kurz baut.

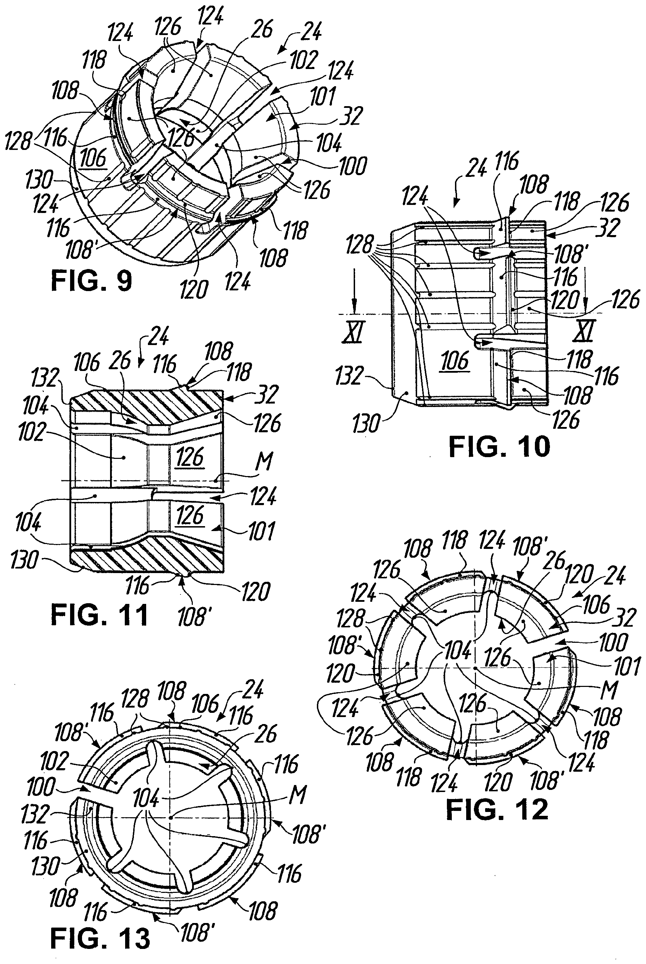

Das in den Fig. 9 bis 13 separat gezeigte, ebenfalls aus Kunststoff spritzgegossene Einsatzteil 24 ist im Wesentlichen ringförmig und mit einem durchgehenden Längsschlitz 100 versehen, wie am besten in den Fig. 12 und 13 zu erkennen ist. Aufgrund des Längsschlitzes 100 ist das Einsatzteil 24 auffederbar, wenn es noch nicht in der Aussparung 22 des Kolbens 14 montiert ist. Damit ist es möglich, das Einsatzteil 24 in axialer Richtung zur Kolbenstange 18 zu fügen, wobei der Kugelkopf 20 der Kolbenstange 18 den Hinterschnitt 26 am Einsatzteil 24 über eine innenumfangsseitige Fügeschräge 101 am Einsatzteil 24 zu überdrücken vermag und nach einem radial federnden "Ausweichen" des Einsatzteils 24 an einem zum Kolben 14 weisenden, im Wesentlichen kugelzonenförmigen Flächenabschnitt 102 des Hinterschnitts 26 zur Anlage gelangen kann, wie in Fig. 14 rechts dargestellt. Über diesen kugelzonenförmigen Flächenabschnitt 102 am Hinterschnitt 26 des Einsatzteils 24 sind bei Zugbeaufschlagung der Kolbenstange 18 Normalkräfte vom Kugelkopf 20 direkt in Richtung der Formschlussverbindung 30 leitbar, wie noch beschrieben werden wird. Das Auffedern des Einsatzteils 24 bei dessen Montage an der Kolbenstange 18 ist noch dadurch begünstigt, dass es innenumfangsseitig mit einer Mehrzahl von in Längsrichtung verlaufenden Nuten 104 versehen ist, die in Umfangsrichtung gesehen gleichmäßig voneinander - bzw. bezüglich des Längsschlitzes 100 - beabstandet sind und an diesen Stellen des Einsatzteils 24 quasi elastisch federnde "Filmscharniere" ausbilden.

Als Formschlussverbindung 30 zwischen dem Einsatzteil 24 und dem Kolben 14 ist im dargestellten Ausführungsbeispiel eine Schnappverbindung vorgesehen, die nachfolgend beschrieben werden soll. Gemäß insbesondere den Fig. 9 bis 11 ist das Einsatzteil 24 an seiner Außenumfangsfläche 106 mit einer Mehrzahl von bezüglich der Mittelachse M des Geberzylinders 10 radial an der Außenumfangsfläche 106 überstehenden Vorsprüngen 108, 108' versehen, die im montierten Zustand des Einsatzteils 24 in einer zugeordneten Ausnehmung 110 in der Aussparung 22 des Kolbens 14 verrastend eingreifen, wie in den Fig. 2 und 3 gezeigt. Bei der Ausnehmung 110 handelt es sich im dargestellten Ausführungsbeispiel um eine umlaufende Nut an einer ansonsten im Wesentlichen zylindrischen Innenumfangsfläche 112 der Aussparung 22 im Kolben 14, wie am besten in den Fig. 6 und 14 zu erkennen ist. Bei 114 ist die Ausnehmung 108 lediglich durch Kernführungsbereiche unterbrochen, die bei der spritzgusstechnischen Herstellung des Kolbens 14 auf dem Fachmann bekannte Art und Weise dazu dienen, einen radial spreizbaren Kern der Spritzgussform (nicht gezeigt) insbesondere beim Ausformen zu führen, damit die durch den spreizbaren Kern erzeugte, hinterschnittene Geometrie der Ausnehmung 110 beim Ausformen keinen Schaden nimmt.

Wie ferner insbesondere die Fig. 3, 10 und 11 zeigen, sind die an der Außenumfangsfläche 106 des Einsatzteils 24 ausgebildeten Vorsprünge 108, 108' nasenartig geformt, jeweils mit einer Fügeschräge 116 auf ihrer dem Druckraum 16 zugewandten Seite. Ein erster Teil der nasenartig geformten Vorsprünge 108 weist auf der vom Druckraum 16 abgewandten Seite Rastflächen 118 auf, die im Wesentlichen quer zur Mittelachse M verlaufen (siehe die Fig. 10 und 11 oben), während ein zweiter Teil der nasenartig geformten Vorsprünge 108' auf der vom Druckraum 16 abgewandten Seite mit Vorspannschrägen 120 versehen ist, über die das Einsatzteil 24 in der Aussparung 22 des Kolbens 14 in Richtung des Druckraums 16 vorspannbar ist (vgl. die Fig. 10 und 11 unten). Hierbei liegen die Vorspannschrägen 120 an einer Kante 122 auf der vom Druckraum 16 abgewandten Seite der Ausnehmung 110 an (diese Anlage ist in den Figuren nicht gezeigt), um das Einsatzteil 24 in der Aussparung 22 des Kolbens 14 axial spielfrei gegen den Kugelkopf 20 der Kolbenstange 18 zu halten, wie in Fig. 2 dargestellt. Die Anordnung der nasenartig geformten Vorsprünge 108, 108' an der Außenumfangsfläche 106 des Einsatzteils 24 ist dabei so getroffen, dass die Vorsprünge 108, 108' bezüglich der Mittelachse M gleichmäßig voneinander winkelbeabstandet sind und sich Rastflächen 118 und Vorspannschrägen 120 von Vorsprung 108 zu Vorsprung 108' abwechseln, wie in den Fig. 9 und 10 zu sehen ist.

Wie weiterhin am besten den Fig. 9, 10 und 12 zu entnehmen ist, ist das Einsatzteil 24 ausgehend von seinem vom Druckraum 16 abgewandten Anschlagende 32 mit im Wesentlichen parallel zur Mittelachse M verlaufenden Schlitzen 124 versehen, die sich etwa über die halbe Länge des Einsatzteils 24 erstrecken und einzelne, die Vorsprünge 108, 108' tragende Federsegmente 126 des Einsatzteils 24 voneinander trennen. Gemäß insbesondere den Fig. 11 und 12 enden die in Längsrichtung verlaufenden Nuten 104 in den parallel zur Mittelachse M verlaufenden Schlitzen 124, sind mit diesen also ausgefluchtet.

Gemäß insbesondere den Fig. 9 und 10 ist das Einsatzteil 24 schließlich an seiner Außenumfangsfläche 106 mit einer Mehrzahl von radial überstehenden Längsrippen 128 versehen, über die das Einsatzteil 24 in der Aussparung 22 radialspielfrei gehalten ist. Die in den Fig. 9, 12 und 13 aus Gründen der besseren Übersichtlichkeit nicht sämtlich mit Bezugszeichen versehenen Längsrippen 128 erstrecken sich ausgehend von einer dem Druckraum 16 zugewandten Fügeschräge 130 des Einsatzteils 24, die selbst an einer ringförmigen Stirnfläche 132 des Einsatzteils 24 beginnt, bis an dessen Anschlagende 32 und werden dabei lediglich von den Vorsprüngen 108, 108' unterbrochen.

Insoweit ist ersichtlich, dass das Einsatzteil 24 in der Aussparung 22 des Kolbens 14 ohne Radialspiel gehalten ist, wobei sich das Einsatzteil 24 über die Längsrippen 128 an der Innenumfangsfläche 112 der Aussparung 22 abstützt. Zugleich hält das Einsatzteil 24 den Kugelkopf 20 der Kolbenstange 18 ohne Axialspiel in bzw. an der kugelkalottenförmigen Ausnehmung 98 der Aussparung 22, wobei sich das Einsatzteil 24 über die Vorspannschrägen 120 der Vorsprünge 108' an der Kante 122 des Kolbens 14 abstützt. Dabei ist die zum Druckraum 16 gewandte Stirnfläche 132 des Einsatzteils 24 gemäß Fig. 2 von dem Boden 96 der Aussparung 22 im Kolben 14 geringfügig axial beabstandet, während das Anschlagende 32 des Einsatzteils 24 axial über eine vom Druckraum 16 abgewandte, ringförmige Stirnfläche 134 des Kolbens 14 vorsteht, wie am besten in Fig. 3 zu sehen ist, um in der Ruhestellung des Kolbens 14 an der Anschlagfläche 34 des Gehäuseeinsatzes 38 zur Anlage zu gelangen. Der Gehäuseeinsatz 38 selbst ist in diesem Bereich derart gestuft ausgebildet, dass der Kolben 14 mit seiner Stirnfläche 134 nicht am Gehäuseeinsatz 38 zur Anlage gelangen kann.

Jegliche über die Kolbenstange 18 in Richtung des Kolbens 14 aufgebrachten Druckkräfte D werden somit direkt vom Kugelkopf 20 der Kolbenstange 18 über die kugelkalottenförmige Ausnehmung 98 in der Aussparung 22 in den Kolben 14 eingeleitet. Eine Belastung des Einsatzteils 24 erfolgt hierbei also nicht. Wird an der Kolbenstange 18 in der Ruhestellung des Kolbens 14 (siehe die Fig. 2 und 3) eine Zugkraft Z aufgebracht, so wird diese über den Kugelkopf 20 der Kolbenstange 18 in den kugelzonenförmigen Flächenabschnitt 102 des Hinterschnitts 26 am Einsatzteil 24 eingeleitet, welches sich seinerseits über das Anschlagende 32 an der Anschlagfläche 34 des Gehäuseeinsatzes 38 des Zylindergehäuses 12 abstützt. Damit kann in der Ruhestellung des Kolbens 14 die Formschlussverbindung 30 zwischen dem Einsatzteil 24 und dem Kolben 14 nicht mit Zugkräften beaufschlagt bzw. überlastet werden, der Kraftfluss verläuft vielmehr von der Kolbenstange 18 auf das Einsatzteil 24 im Kolben 14 und von dort direkt in den Gehäuseeinsatz 38 des Zylindergehäuses 12.

Befindet sich der Kolben 14 in einer Betätigungsstellung (nicht dargestellt) im Zylindergehäuse 12 und wird an der Kolbenstange 18 eine Zugkraft Z aufgebracht, so wird diese wiederum über den Kugelkopf 20 der Kolbenstange 18 in den kugelzonenförmigen Flächenabschnitt 102 des Hinterschnitts 26 am Einsatzteil 24 eingeleitet. Im Kontaktbereich zwischen dem Kugelkopf 20 und dem kugelzonenförmigen Flächenabschnitt 102 werden dabei lediglich Normalkräfte in das Einsatzteil 24 eingeleitet, deren Wirklinien zugleich axial vom Druckraum 16 weg und nach radial außen verlaufen. Dieser Wirklinienverlauf ist in Fig. 14 für eine Kontaktlinie zwischen dem Kugelkopf 20 und dem Hinterschnitt 26 mit den gestrichelten Linien bei N angedeutet. Diese infolge der axialen Lage - in Betätigungsrichtung gesehen vor dem Hinterschnitt 26 - der Formschlussverbindung 30 zwischen Einsatzteil 24 und Kolben 14 insbesondere auf die Formschlussverbindung 30 gerichteten bzw. zielenden Normalkräfte verlaufen durch das Einsatzteil 24 und besitzen an den außenumfangsseitigen Vorsprüngen 108, 108' des Einsatzteils 24 stets eine radiale Komponente, die bestrebt ist, die Vorsprünge 108, 108' in die zugeordnete Ausnehmung 110 des Kolbens 14 zu drücken. Somit verstärken in einer Betätigungsstellung des Kolbens 14 über die Kolbenstange 18 aufgebrachten Zugkräfte Z die Formschlussverbindung 30 zwischen Einsatzteil 24 und Kolben 14.

Ein Geberzylinder hat ein Zylindergehäuse, in dem ein mittels einer Kolbenstange zwischen einer Kolbenruhestellung und einer Kolbenbetätigungsstellung verschiebbarer Kolben einen Druckraum variabel begrenzt. Ein Kugelkopf der Kolbenstange ist in einer Aussparung des Kolbens aufgenommen und dort durch ein Einsatzteil mit einem Hinterschnitt gehalten. Das Einsatzteil ist mittels einer Formschlussverbindung zum Kolben in der Aussparung gesichert und steht mit einem Anschlagende über die Aussparung vor, um in der Kolbenruhestellung an einer Anschlagfläche des Zylindergehäuses anzuliegen. In sehr kompakter Weise liegt der Kugelkopf in der Aussparung unmittelbar am Kolben an, so dass über die Kolbenstange aufgebrachte Druckkräfte stets direkt auf den Kolben übertragbar sind. Ferner befindet sich die Formschlussverbindung zwischen dem Hinterschnitt und dem Anschlagende des Einsatzteils, so dass über die Kolbenstange aufgebrachte Zugkräfte in einer Kolbenbetätigungsstellung die Formschlussverbindung verstärken, um eine hohe Auszugssicherheit zu gewährleisten.

### BEZUGSZEICHENLISTE

- 10: Geberzylinder
- 12: Zylindergehäuse
- 14: Kolben
- 16: Druckraum
- 18: Kolbenstange
- 20: Kugelkopf
- 22: Aussparung
- 24: Einsatzteil
- 26: Hinterschnitt
- 28: Anschlussstück
- 30: Formschlussverbindung
- 32: Anschlagende
- 34: Anschlagfläche
- 36: Gehäusegrundkörper
- 38: Gehäuseeinsatz
- 40: Druckanschluss
- 42: Nachlaufanschluss
- 44: Nachlaufbereich
- 46: Befestigungsflansch
- 48: ovale Öffnung
- 50: Radialnut
- 52: O-Ring
- 54: Bajonettverbindung
- 56: Schulterabschnitt
- 58: Sekundärdichtelement
- 59: Ringaussparung
- 60: Stützring
- 62: Primärdichtelement
- 64: Ringaussparung
- 66: Lauffläche
- 68: Stirnnut
- 70: Axialnut
- 72: Schlitz
- 74: Feder
- 76: Ende
- 78: Boden
- 80: Ende
- 82: Aussparung
- 84: Fügeschräge
- 86: Zentrierfortsatz
- 88: Führungshülse
- 90: Ringbund
- 92: Boden
- 94: Fügeschräge
- 96: Boden
- 98: kugelkalottenförmige Ausnehmung
- 100: Längsschlitz
- 101: Fügeschräge
- 102: kugelzonenförmiger Flächenabschnitt
- 104: Nut
- 106: Außenumfangsfläche
- 108, 108': Vorsprung
- 110: Ausnehmung
- 112: Innenumfangsfläche
- 114: Kernführungsbereich
- 116: Fügeschräge
- 118: Rastfläche
- 120: Vorspannschräge
- 122: Kante
- 124: Schlitz
- 126: Federsegment
- 128: Längsrippe
- 130: Fügeschräge
- 132: Stirnfläche
- 134: Stirnfläche

- D: Druckkraft
- M: Mittelachse
- N: Normalkraft
- Z: Zugkraft

## Patentansprüche

1. Geberzylinder (10), insbesondere für eine hydraulische Kupplungsbetätigungsvorrichtung in Kraftfahrzeugen, mit einem Zylindergehäuse (12), in dem ein Kolben (14) längsverschieblich geführt ist, der einen Druckraum (16) variabel begrenzt und mittels einer am Kolben (14) angelenkten Kolbenstange (18) aus einer Ruhestellung zu einer Betätigungsstellung und umgekehrt verschiebbar ist, wobei die Kolbenstange (18) einen Kugelkopf (20) aufweist, der in einer vom Druckraum (16) abgewandten Aussparung (22) des Kolbens (14) aufgenommen und dort durch ein Einsatzteil (24) mit einem Hinterschnitt (26) gehalten ist, das mittels einer Formschlussverbindung (30) zum Kolben (14) in der Aussparung (22) gesichert ist und auf der vom Druckraum (16) abgewandten Seite des Kolbens (14) mit einem Anschlagende (32) über die Aussparung (22) vorsteht, wobei der Kugelkopf (20) der Kolbenstange (18) in der Aussparung (22) unmittelbar am Kolben (14) anliegt, so dass über die Kolbenstange (18) aufgebrachte Druckkräfte (D) direkt auf den Kolben (14) übertragbar sind, und wobei die Formschlussverbindung (30) des Einsatzteils (24) zum Kolben (14) sich zwischen dem Hinterschnitt (26) und dem Anschlagende (32) des Einsatzteils (24) befindet, so dass über die Kolbenstange (18) aufgebrachte Zugkräfte (Z) in einer Betätigungsstellung des Kolbens (14) die Formschlussverbindung (30) des Einsatzteils (24) zum Kolben (14) verstärken, **dadurch gekennzeichnet, dass** das Anschlagende (32) des Einsatzteils (24) in der Ruhestellung des Kolbens (14) an einer zugeordneten Anschlagfläche (34) des Zylindergehäuses (12) zur Anlage gelangt, um Zugkräfte von der Formschlussverbindung (30) zwischen Einsatzteil (24) und Kolben (14) fernzuhalten.

2. Geberzylinder (10) nach Anspruch 1, **dadurch gekennzeichnet, dass** es sich bei der Formschlussverbindung (30) um eine Schnappverbindung handelt.

3. Geberzylinder (10) nach Anspruch 2, **dadurch gekennzeichnet, dass** an einer Innenumfangsfläche der Aussparung (22) im Kolben (14) oder an einer Außenumfangsfläche (106) des Einsatzteils (24) eine Mehrzahl von bezüglich einer Mittelachse (M) des Geberzylinders (10) radial an der jeweiligen Umfangsfläche überstehenden Vorsprüngen (108, 108') ausgebildet ist, die in einer zugeordneten Ausnehmung (110) am jeweils anderen Teil verrastend eingreifen, wobei der Hinterschnitt (26) des Einsatzteils (24) einen Flächenabschnitt (102) aufweist, über den Normalkräfte vom Kugelkopf (20) direkt in Richtung der Vorsprünge (108, 108') leitbar sind.

4. Geberzylinder (10) nach Anspruch 3, **dadurch gekennzeichnet, dass** die an der Außenumfangsfläche (106) des Einsatzteils (24) ausgebildeten Vorsprünge (108, 108') nasenartig geformt sind, mit einer Fügeschräge (116) auf ihrer dem Druckraum (16) zugewandten Seite.

5. Geberzylinder (10) nach Anspruch 4, **dadurch gekennzeichnet, dass** ein erster Teil der nasenartig geformten Vorsprünge (108) auf der vom Druckraum (16) abgewandten Seite Rastflächen (118) aufweist, die im Wesentlichen quer zur Mittelachse (M) verlaufen, während ein zweiter Teil der nasenartig geformten Vorsprünge (108') auf der vom Druckraum (16) abgewandten Seite mit Vorspannschrägen (120) versehen ist, über die das Einsatzteil (24) in der Aussparung (22) des Kolbens (14) in Richtung des Druckraums (16) vorspannbar ist.

6. Geberzylinder (10) nach Anspruch 5, **dadurch gekennzeichnet, dass** die nasenartig geformten Vorsprünge (108, 108') bezüglich der Mittelachse (M) gleichmäßig voneinander winkelbeabstandet sind und sich Rastflächen (118) und Vorspannschrägen (120) von Vorsprung (108) zu Vorsprung (108') abwechseln.

7. Geberzylinder (10) nach einem der Ansprüche 3 bis 6, **dadurch gekennzeichnet, dass** es sich bei der Ausnehmung (110) um eine umlaufende Nut an der Innenumfangsfläche (112) der Aussparung (22) im Kolben (14) handelt.

8. Geberzylinder (10) nach einem der Ansprüche 3 bis 7, **dadurch gekennzeichnet, dass** das Einsatzteil (24) ausgehend von seinem vom Druckraum (16) abgewandten Ende mit im Wesentlichen parallel zur Mittelachse (M) verlaufenden Schlitzen (124) versehen ist, die einzelne, die Vorsprünge (108, 108') tragende Federsegmente (126) des Einsatzteils (24) voneinander trennen.

9. Geberzylinder (10) nach einem der vorhergehenden Ansprüche, **dadurch gekennzeichnet, dass** das Einsatzteil (24) ringförmig und mit einem durchgehenden Längsschlitz (100) versehen ist, so dass das Einsatzteil (24) auffederbar ist.

10. Geberzylinder (10) nach Anspruch 9, **dadurch gekennzeichnet, dass** das Einsatzteil (24) innenumfangsseitig mit einer Mehrzahl von in Längsrichtung verlaufenden Nuten (104) versehen ist, die in Umfangsrichtung gesehen gleichmäßig voneinander beabstandet sind.

11. Geberzylinder (10) nach den Ansprüchen 8 und 10, **dadurch gekennzeichnet, dass** die in Längsrichtung verlaufenden Nuten (104) in den parallel zur Mittelachse (M) verlaufenden Schlitzen (124) enden.

12. Geberzylinder (10) nach einem der vorhergehenden Ansprüche, **dadurch gekennzeichnet, dass** das Einsatzteil (24) außenumfangsseitig mit einer Mehrzahl von radial überstehenden Längsrippen (128) versehen ist, über die das Einsatzteil (24) in der Aussparung (22) radialspielfrei gehalten ist.

13. Geberzylinder (10) nach einem der vorhergehenden Ansprüche, **dadurch gekennzeichnet, dass** an einem Boden (96) der Aussparung (22) im Kolben (14) eine zum Kugelkopf (20) der Kolbenstange (18) komplementär geformte, kugelkalottenförmige Ausnehmung (98) ausgebildet ist, in der der Kugelkopf (20) am Kolben (14) unmittelbar anliegt.

14. Geberzylinder (10) nach einem der vorhergehenden Ansprüche, **dadurch gekennzeichnet, dass** der Kolben (14) eine dem Druckraum (16) zugewandte zweite Aussparung (82) aufweist, in der ein Ende (80) einer den Kolben (14) in Richtung der Ruhestellung vorspannenden Feder (74) aufgenommen ist, wobei die zweite Aussparung (82) vorzugsweise an ihrem dem Druckraum (16) zugewandten Ende innenumfangsseitig mit einer umlaufenden Fügeschräge (84) für die Feder (74) versehen ist.

15. Geberzylinder (10) nach Anspruch 14, **dadurch gekennzeichnet, dass** in der zweiten Aussparung (82) des Kolbens (14) ein zentraler Zentrierfortsatz (86) ausgebildet ist, auf dem eine Führungshülse (88) sitzt, die die Feder (74) stützt.

## Claims

1. Master cylinder (10), particularly for a hydraulic clutch actuating device in motor vehicles, comprising a cylinder housing (12) in which a piston (14) is guided to be longitudinally displaceable, the piston variably bounding a pressure chamber (16) and being displaceable from a rest position to an actuating position and conversely by means of a piston rod (18) pivotably connected with the piston (14), wherein the piston rod (14) has a ball head (20) which is received in a recess (22) of the piston (14) remote from the pressure chamber (16) and is retained therein by an insert member (24) with an undercut (26), which insert member is secured by means of a mechanically positive connection (30) to the piston (14) in the recess (22) and on the side of the piston (14) remote from the pressure chamber (16) projects by an abutment end (32) beyond the recess (22), wherein the ball head (20) of the piston rod (18) bears directly against the piston (14) in the recess (22), so that pressure forces (D) applied by way of the piston rod (18) are directly transmissible to the piston (14), and wherein the mechanically positive connection (30) of the insert member (24) with the piston (14) is disposed between the undercut (26) and the abutment end (32) of the insert member (24) so that tension forces (Z) applied by way of the piston rod (18) in an actuating position of the piston (14) reinforce the mechanically positive connection (30) of the insert member (24) with the piston (14), **characterized in that,** in the rest position of the piston (14), the abutment end (32) of the insert member (24) comes into contact with an associated abutment surface (34) of the cylinder housing (12) in order to keep away tension forces from the mechanically positive connection (30) between insert member (24) and piston (14).

2. Master cylinder (10) according to claim 1, **characterized in that** the mechanically positive connection (30) is a snap connection.

3. Master cylinder (10) according to claim 2, **characterized in that** a plurality of projections (108, 108') is formed at an inner circumferential surface of the recess (22) in the piston (14) or at an outer circumferential surface (106) of the insert member (24), which projections project radially at the respective circumferential surface with respect to a center axis (M) of the master cylinder (10) and have detenting engagement in an associated recess (110) at the respective other part, wherein the undercut (26) of the insert member (24) has a surface section (102) by way of which normal forces can be directed from the ball head (20) directly in the direction of the projections (108, 108').

4. Master cylinder (10) according to claim 3, **characterized in that** the projections (108, 108') formed at the outer circumferential surface (106) of the insert member (24) are of nose-like form with a joining chamfer (116) on the side thereof facing the pressure chamber (16).

5. Master cylinder (10) according to claim 4, **characterized in that** a first part of the projections (108) of nose-like form has on the side remote from the pressure chamber (16) detent surfaces (118) extending substantially transversely to the center axis (M), whereas a second part of the projections (108') of nose-like form is provided on the side remote from the pressure chamber (16) with biasing chamfers (120) by way of which the insert member (24) can be biased in the recess (22) of the piston (14) in the direction of the pressure chamber (16) .

6. Master cylinder (10) according to claim 5, **characterized in that** the projections (108, 108') of nose-like form are uniformly angularly spaced from one another with respect to the center axis (M) and detent surfaces (118) and biasing chamfers (120) alternate from projection (108) to projection (108').

7. Master cylinder (10) according to any one of claims 3 to 6, **characterized in that** the recess (110) is an encircling groove in the inner circumferential surface (112) of the recess (22) in the piston (14).

8. Master cylinder (10) according to any one of claims 3 to 7, **characterized in that** the insert member (24) starting from the end thereof remote from the pressure chamber (16) is provided with slots (124) which extend substantially parallel to the center axis (M) and separate spring segments (126), which carry the projections (108, 108'), of the insert member (24) from one another.

9. Master cylinder (10) according to any one of the preceding claims, **characterized in that** the insert member (24) is annular and provided with a continuous longitudinal slot (100) so that the insert member (24) can spring back.

10. Master cylinder (10) according to claim 9, **characterized in that** the insert member (24) is provided at the inner circumferential side with a plurality of grooves (104) extending in longitudinal direction and uniformly spaced apart as seen in circumferential direction.

11. Master cylinder (10) according to claims 8 and 10, **characterized in that** the grooves (104) extending in longitudinal direction end in slots (124) running parallel to the center axis (M).

12. Master cylinder (10) according to any one of the preceding claims, **characterized in that** the insert member (24) is provided at the outer circumferential side with a plurality of radially projecting longitudinal ribs (128) by way of which the insert member (24) is retained in the recess (22) free of radial play.

13. Master cylinder (10) according to any one of the preceding claims, **characterized in that**, at a base (96) of the recess (22) in the piston (14), a recess (98) of spherical cup shape which is shaped to be complementary to the ball head (20) of the piston rod (18) is formed, in which recess the ball head (20) directly bears against the piston (14).

14. Master cylinder (10) according to any one of the preceding claims, **characterized in that** the piston (14) has a second recess (82) which faces the pressure chamber (16) and in which an end (80) of a spring (74) biasing the piston (14) in the direction of the rest position is received, wherein the second recess (82) is preferably provided at the inner circumferential side at its end facing the pressure chamber (16) with an encircling joining chamfer (84) for the spring (74).

15. Master cylinder (10) according to claim 14, **characterized in that** a central centering projection (86) on which a guide sleeve (88) supporting the spring (74) is seated is formed in the second recess (82) of the piston (14).

## Revendications

1. Maître-cylindre (10), en particulier pour un dispositif d'actionnement d'embrayage hydraulique dans des véhicules automobiles, avec un carter de cylindre (12) dans lequel un piston (14) est guidé de manière déplaçable longitudinalement, qui délimite une chambre de pression (16) de façon variable et peut être déplacé au moyen d'une tige de piston (18) articulée au piston (14) d'une position de repos à une position d'actionnement et inversement, où la tige de piston (18) présente une tête sphérique (20) qui est reçue dans un évidement (22) du piston (14) opposé à la chambre de pression (16) et y est maintenue par une partie d'insertion (24) avec une contre-dépouille (26), qui est fixée dans l'évidement (22) au moyen d'une liaison par complémentarité de forme (30) au piston (14) et sur le côté du piston (14) opposé à la chambre de pression (16) dépasse de l'évidement (22) par une extrémité de butée (32), où la tête sphérique (20) de la tige de piston (18) repose directement sur le piston (14) dans l'évidement (22), de sorte que les forces de compression (D) appliquées par le biais de la tige de piston (18) peuvent être transmises directement au piston (14), et où la liaison par complémentarité de forme (30) de la partie d'insertion (24) au piston (14) se trouve entre la contre-dépouille (26) et l'extrémité de butée (32) de la partie d'insertion (24), de sorte que les forces de traction (Z) appliquées par le biais de la tige de piston (18) renforcent dans une position d'actionnement du piston (14) la liaison par complémentarité de forme (30) de la partie d'insertion (24) avec le piston (14), **caractérisé en ce que** l'extrémité de butée (32) de la partie d'insertion (24) dans la position de repos du piston (14) vient s'appuyer sur une surface de butée associée (34) du carter de cylindre (12) afin de maintenir les forces de traction éloignées de la liaison par complémentarité de forme (30) entre la partie d'insertion (24) et le piston (14).

2. Maître-cylindre (10) selon la revendication 1, **caractérisé en ce que** la liaison par complémentarité de forme (30) est une liaison par encliquetage.

3. Maître-cylindre (10) selon la revendication 2, **caractérisé en ce que** sur une surface périphérique interne de l'évidement (22) dans le piston (14) ou sur une surface périphérique externe (106) de la partie d'insertion (24) une pluralité de saillies (108, 108') dépassant radialement sur la surface périphérique respective par rapport à un axe central (M) du maître-cylindre (10) est formée, qui s'engagent chacune d'une manière encliquetable dans un évidement (110) associé sur l'autre partie respective, où la contre-dépouille (26) de la partie d'insertion (24) présente un tronçon de surface (102) par le biais duquel les forces normales de la tête sphérique (20) peuvent être guidées directement en direction des saillies (108, 108').

4. Maître-cylindre (10) selon la revendication 3, **caractérisé en ce que** les saillies (108, 108') formées sur la surface périphérique externe (106) de la partie d'insertion (24) sont en forme de nez, avec un biseau de jonction (116) sur leur côté tourné vers la chambre de pression (16).

5. Maître-cylindre (10) selon la revendication 4, **caractérisé en ce qu'**une première partie des saillies en forme de nez (108) présente des surfaces d'encliquetage (118) sur le côté opposé à la chambre de pression (16), qui s'étendent sensiblement transversalement à l'axe central (M), tandis qu'une deuxième partie des saillies en forme de nez (108') est munie sur le côté opposé à la chambre de pression (16) de biseaux de précontrainte (120) par lesquels la partie d'insertion (24) dans l'évidement (22) du piston (14) peut être précontrainte en direction de la chambre de pression (16).

6. Maître-cylindre (10) selon la revendication 5, **caractérisé en ce que** les saillies en forme de nez (108, 108') sont espacées angulairement les unes des autres de façon uniforme par rapport à l'axe central (M) et les surfaces d'encliquetage (118) et les biseaux de précontrainte (120) alternent d'une saillie (108) à une saillie (108').

7. Maître-cylindre (10) selon l'une quelconque des revendications 3 à 6, **caractérisé en ce que** l'évidement (110) est une rainure circonférentielle sur la surface périphérique interne (112) de l'évidement (22) dans le piston (14).

8. Maître-cylindre (10) selon l'une des revendications 3 à 7, **caractérisé en ce que** la partie d'insertion (24), à partir de son extrémité opposée à la chambre de pression (16), est munie de fentes (124) s'étendant sensiblement parallèlement à l'axe central (M) qui séparent les uns des autres les segments de ressort individuels (126) de la partie d'insertion (24) portant les saillies (108, 108').

9. Maître-cylindre (10) selon l'une des revendications précédentes, **caractérisé en ce que** la partie d'insertion (24) est annulaire et munie d'une fente longitudinale continue (100), de sorte que la partie d'insertion (24) peut être dilatée.

10. Maître-cylindre (10) selon la revendication 9, **caractérisé en ce que** la partie d'insertion (24) est munie sur le côté périphérique intérieur d'une pluralité de rainures (104) s'étendant dans la direction longitudinale qui, vues dans la direction périphérique, sont régulièrement espacées les unes des autres.

11. Maître-cylindre (10) selon les revendications 8 et 10, **caractérisé en ce que** les rainures (104) s'étendant dans la direction longitudinale se terminent dans les fentes (124) s'étendant parallèlement à l'axe central (M).

12. Maître-cylindre (10) selon l'une des revendications précédentes, **caractérisé en ce que** la partie d'insertion (24) est munie d'une pluralité de nervures longitudinales (128) faisant saillie radialement du côté périphérique externe, par lesquelles la partie d'insertion (24) est maintenue sans jeu radial dans l'évidement (22).

13. Maître-cylindre (10) selon l'une des revendications précédentes, **caractérisé en ce que** sur un fond (96) de l'évidement (22) dans le piston (14) un évidement (98) en forme de dôme sphérique formé de manière complémentaire à la tête sphérique (20) de la tige de piston (18) est agencé, dans lequel la tête sphérique (20) repose directement sur le piston (14).

14. Maître-cylindre (10) selon l'une des revendications précédentes, **caractérisé en ce que** le piston (14) présente un deuxième évidement (82) tourné vers la chambre de pression (16), dans lequel une extrémité (80) d'un ressort (74) précontraignant le piston (14) dans la direction de la position de repos est reçue, où le deuxième évidement (82) est muni de préférence à son extrémité tournée vers la chambre de pression (16) du côté périphérique intérieur d'un biseau de jonction circonférentiel (84) pour le ressort (74).

15. Maître-cylindre (10) selon la revendication 14, **caractérisé en ce qu'**un prolongement de centrage central (86) est formé dans le deuxième évidement (82) du piston (14), sur lequel repose un manchon de guidage (88) qui soutient le ressort (74).
